# NEUE EUROPÄISCHE PATENTSCHRIFT

(11) **EP 0 990 101 B2**
(45) Veröffentlichungstag und Bekanntmachung des Hinweises auf die Entscheidung über den Einspruch: **26.08.2009**
(45) Hinweis auf die Patenterteilung: 16.04.2003
(21) Anmeldenummer: 97912156.3
(22) Anmeldetag: 09.10.1997
(51) Int. Cl.: F16L 39/00, F16L 55/165, F16L 9/18

(54) **VERFAHREN ZUM TRANSPORT VON SAUERGAS**
METHOD OF TRANSPORTING ACID GAS
PROCEDE POUR LE TRANSPORT DE GAZ ACIDE

(30) Priorität: 07.03.1997 DE 19709373
(43) Veröffentlichungstag der Anmeldung: 05.04.2000
(73) Patentinhaber: Veenker, Manfred, Dr.-Ing., D-30173 Hannover (DE); BEB ERDGAS UND ERDÖL GMBH, D-30659 Hannover (DE)
(72) Erfinder: Veenker, Manfred, Dr.-Ing., 30173 Hannover (DE); Schlemm, Friedrich, 30559 Hannover (DE)
(74) Vertreter: Vonnemann, Gerhard
(86) Internationale Anmeldenummer: PCT/EP1997/005563
(87) Internationale Veröffentlichungsnummer: WO 1998/040657

(56) Entgegenhaltungen:
- WO-A-90/00698
- WO-A-90/04736
- DE-A- 1 173 856
- DE-A- 3 818 998
- DE-A- 3 929 325
- US-A- 2 475 635
- US-A- 3 581 775
- US-A- 3 777 502
- US-A- 4 886 305
- US-A- 5 127 231
- G. SIEGMUND: 'Einsatz von Schwefellösemittel bei der Sauergasförderung' 26 Februar 1993, KOMPENDIUM ZUR 6. VORTRAGS- UND DISKUSSIONSTAGUNG "CHEMISCHE PRODUKTE IN DER ERDÖL-/ERDGASGEWINNUNG, CLAUSTHAL-ZELLERFELD 26.02.1993, INSTITUT FÜR TIEFBAUTECHNIK, ERDÖL- UND ERDGASGEWINNUNG, TECHNISCHE UNIVERSITÄT CLAUSTHAL,

## Beschreibung

Die Erfindung betrifft ein Verfahren zum Transport von Sauergas.

Aus der US 5 127 231 A ist bekannt, das zu transportierende Gas mit einem Anti-Korrosions-Zusatz zu versehen, welcher nach dem Transport wieder abgetrennt und über eine separate Leitung zurück transportiert wird.

Das in Deutschland geförderte Gas ist zum großen Teil Sauergas mit einem hohen Anteil an H₂S. Das Gas, das in Stahlrohrleitungen transportiert wird, wird vorher getrocknet, da beim Naßgastransport der Stahl in kürzester Zeit durch Korrosion zerstört wäre. Die auf den Förderplätzen installierten Trocknungsanlagen erfordern einen hohen Investitionsaufwand, was den Transport des Sauergases entsprechend verteuert.

Es ist daher Aufgabe der Erfindung eine wirtschaftliche Lösung für den Transport von Sauergas anzugeben.

Die Aufgabe wird durch ein Verfahren mit den Merkmalen des Patentanspruchs 1 gelöst.

Vorteilhafte Ausgestaltungen des Verfahrens sind in den Ansprüchen 2 bis 4 beschrieben.

Das Sauergas wird in feuchtem Zustand transportiert, so daß die auf den Förderplätzen installierten Trocknungsanlagen vorteilhaft entfallen können und statt dessen wenige zentrale Trocknungsanlagen kostengünstig betrieben werden.

Der Transport erfolgt durch eine doppelwandige Leitung, wobei zwischen äußerer und innerer Wandung ein Spülraum vorgesehen ist. Die Leitung ist dazu aus einem äußeren Rohr mit einem Inliner aufgebaut. Der Inliner weist eine hohe Resistenz gegen aggressive Medien auf. Ein direkter Kontakt zwischen fluidem Medium und dem äußeren Rohr wird vermieden. Die Korrosionsbeständigkeit der Leitung ist daher bedeutend erhöht. Erfahrungsgemäß läßt es sich jedoch nie vollständig ausschließen, daß Wasser und Gas durch den Inliner permeieren. Dieses Gemisch schlägt sich an der Rohrwandung des Außenrohres nieder und führt wiederum zu Korrosionsproblemen. Die Haltbarkeit eines mit einem Inliner ausgekleideten Stahlrohres ist zwar im Vergleich zum ungeschützten Stahlrohr bedeutend verbessert, für einen langjährigen Dauerbetrieb sind jedoch noch bessere Standzeiten wünschenswert. Es ist daher günstig, wenn zwischen äußerem Rohr und Inliner ein Spülraum vorgesehen ist. Dieser Spülraum kann gespült werden und das eingedrungene saure Medium abtransportiert werden. Dieser Spülraum steht dann auch zum Transport weiterer Nutzmedien, beispielsweise am Bohrloch benötigtes Heizgas oder Spindelöl, zur Verfügung. Der Spülraum kann einfach dadurch geschaffen werden, daß der Außendurchmesser des Inliners entsprechend kleiner als der Innendurchmesser des äußeren Rohres gewählt wird. Beim Einziehen des Inliners entsteht dann zwischen äußerem Rohr und Inliner ein Ringraum.

Der Spülraum kann beispielsweise so geschaffen werden, daß der Inliner, vorzugsweise auf seiner Außenseite, Spülkanäle aufweist. Der Inliner kann in Längsrichtung vorgesehene Stege aufweisen, mit denen er sich an der äußeren Wand abstützt. Die Stege können auch gewendelt sein.

Bei einer bevorzugten Ausführungsform ist der Inliner druckfest ausgebildet. Der Druck im Innenraum des Inliners kann dann unterschiedlich vom Druck des Spülraumes zwischen Inliner und äußerem Rohr gewählt werden. Im Innenraum des Inliners kann ein erstes Medium, beispielsweise Sauergas, transportiert werden, während der Spulraum zwischen Inliner und äußerem Rohr für den Transport eines weiteren Mediums genutzt werden kann. Der Druck im Inliner und im Spülraum muß nicht gleich hoch gewählt werden. Dies ist vorteilhaft, da beim Transport der Medien in den beiden zur Verfügung stehenden Räumen Druckfluktuationen nie völlig auszuschließen sind. Der Inliner wird mit einem Druck von 40 bis 160 bar betrieben, während im Spulraum ein Druck von 10 bis 40 bar vorgesehen ist.

Der Druck im Gesamtsystem kann uberwacht werden, wenn der Spulraum mit einem Drucksensor überwacht ist. Wird der Druck im Innenraum des Inliners hoher gewählt als der Druck im äußeren Spülraum, steigt bei Undichtigkeiten des Inliners der Druck im Spulraum an. Dieser Druckanstieg kann mit dem Drucksensor überwacht werden. Dieser Drucksensor kann beispielsweise auch mit einer Armatur zur automatischen Abschaltung des Sauergastransports verbunden sein. Entsteht im Inliner ein größeres Leck, führt dies zu einem rapiden Druckanstieg im Spülraum. Dieser wird vom Drucksensor registriert und fuhrt zu einer Abschaltung des Sauergastransports. Somit kann auf diese Weise verhindert werden, daß auch das äußere Rohr birst. Die Sicherheit der Anlage ist also wesentlich erhöht.

Auch kleinere Lecks des Inliners können detektiert werden, wenn auf der Niederdruckseite des Inliners eine analytische Überwachungseinrichtung des im Spülraum und/oder im Inliner transportierten Fluids vorgesehen ist.

Als günstig hat sich erwiesen, wenn der Inliner aus Kunststoff ausgebildet ist, vorzugsweise Polypropylen, Polyethylen-HD oder Polyethylen-X.

Rohre aus derartigen Kunststoffen sind günstig herzustellen und weisen eine ausreichende Widerstandsfähigkeit gegen aggressive Medien auf. Außerdem ist durch ihre Biegeweichheit eine Anpassung an ein vorhandenes Rohrsystem möglich.

Weist der Inliner eine Bewehrung, vorzugsweise aus faserförmigen Aramiden, insbesondere Gewebe, auf, ist seine Druckfestigkeit wesentlich erhoht. Sind bei unbewehrten Kunststoffrohren Druckfestigkeiten bis zu ca. 25 bar zu erzielen, so kann ein bewehrtes Rohr mit einem Innendruck von mehr als 150 bar betrieben werden. Wird die Bewehrung gunstig gewahlt, bleibt die Biegeweichheit des Kunststoffrohres auch weitgehend erhalten, was insbesondere bei der Sanierung von gekrümmten Leitungen vorteilhaft ist.

Das außere Rohr, welches die innere Leitung gegen die Umgebung begrenzt, ist günstig aus Metall, vorzugsweise Stahl, ausgebildet. Durch die hohe Festigkeit des äußeren Rohres wird die Sicherheit des Leitungssystems erhöht. Bestehende Rohrleitungssysteme konnen vorteilhaft für den Transport gefährdender Stoffe nachgerüstet werden.

Weist das äußere Rohr mindestens die gleiche Druckfestigkeit wie der Inliner auf, kann das Außenrohr bei Versagen des Inliners den Ubergang des Fluids in die Umgebung notfalls verhindern.

Für stark gekrümmte Abschnitte der Leitung, wie Horizontalbögen oder Etagen, ist vorgesehen, daß die Leitung Bögen aufweist, in die vorgefertigte Inlinerelemente eingebaut sind.

Die Verbindung der einzelnen Abschnitte des Inliners erfolgt mit Verbindungsstücken, vorzugsweise Hülsen mit Gewinde oder Flansche, insbesondere aus Edelstahl oder Aluminium. Diese Materialien weisen eine ausreichende Beständigkeit gegenüber Sauergas auf. Die Schraubverbindungen lassen sich leicht ausführen, so daß eine rasche Montage möglich ist. In der Praxis lassen sich Inlinerlängen von mehreren hundert Metern problemlos in ein vorhandenes Rohrsystem einziehen. Verbindungen sind also nur zu vorgefertigten Elementen, die in stark gekrümmten Abschnitten vorgesehen sind, und zu Armaturen notwendig. Die Sanierung und Umstellung eines vorhandenen Druckrohrsystems ist also sehr zeiteffizient möglich.

Weist der Inliner einen Innendruck auf, der höher ist als ein Druck im Spülraum, wird ein Beulen des Inliners vermieden, was sonst wesentlich hohere Sicherheitsanforderungen an das Leitungssystem stellen würde. In anderen Fällen ist es sicherer, wenn der Inliner einen niedrigeren Druck als der Spulraum aufweist, weil dann kein Gas in den Spülraum ubertreten kann. Als geeignete Betriebsparameter haben sich für den Inliner Innendrücke von 40 - 160 bar Sauergas und für den Spülraum Drücke von ca. 10-40 bar bewährt.

Im Betriebszustand weist der Inliner eine Füllung aus Sauergas und der Spülraum eine Füllung aus einem Spülmedium, insbesondere Gas, auf. In den Spülraum eingedrungenes Sauergas kann problemlos abtransportiert werden und damit keine Korrosion am äußeren Rohr verursachen.

Die Leitung eignet sich besonders zur Umstellung von Leitungen für Trockengas auf Naßgas. Dazu wird in eine vorhandene Druckleitung ein Inliner, vorzugsweise mit Hilfe einer Ziehvorrichtung, eingebracht. Insbesondere bei Inlinerlängen von über hundert Meter ist die Materialbelastung geringer, wenn der Inliner durch Ziehen in das vorhandene Rohr eingeführt wird.

Vorteilhaft wird beim Einziehen des Inliners ein Schmiermittel, vorzugsweise Bentonit, verwendet. Wird der gesamte Innenraum des Rohres mit Bentonit gefüllt, schwimmt der Inliner durch Auftrieb auf; es können sich dann keine Reste in Zwickeln absetzen. Bentonit läßt sich anschließend einfach mit Wasser ausspülen.

In gekrümmten Bereichen des äußeren Rohres wird das Rohr aufgeschnitten und vorgefertigte Inlinerelemente eingesetzt.

Die Leitung zum Transport von Sauergas kann mit Vorteil gleichzeitig zum Transport eines Nutzmediums in derselben Leitung genutat werden.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind. Funktionsmäßig gleiche Teile sind dabei mit denselben Bezugszeichen versehen.

Die Figuren zeigen im einzelnen:
- Fig. 1:: eine Aufsicht auf die Leitung in einem Etagenbereich;
- Fig. 2:: eine teilweise angeschnittene Darstellung des Inliners;
- Fig. 3:: einen teilweise angeschnittenes vorgefertigtes Element für einen Horizontalbogen in Draufsicht;
- Fig. 4:: einen Vertikalschnitt durch einen Abschnitt des in Fig. 2 gezeigten vorgefertigten Elements; und
- Fig. 5:: einen Armaturenanschluß.

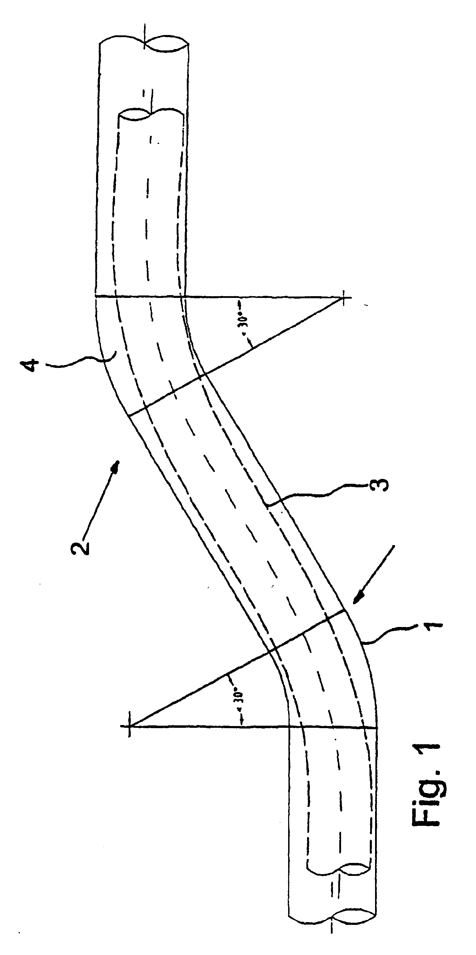

Fig. 1 zeigt einen Längsschnitt durch eine Leitung zum Transport von Sauergas. Das äußere Rohr 1 besteht aus Stahl und ist beispielsweise auf einen Nenndruck von 100 bar ausgelegt. Solche Rohre werden zum Beispiel zum Transport von trockenem Sauergas eingesetzt. Das Rohr weist gekrümmte Abschnitte 2 mit einem Umlenkwinkel von ca. 30 ° auf. Im äußeren Rohr 1 ist ein druckfester Inliner 3 angeordnet. Sein Durchmesser ist geringer als der Durchmesser des äußeren Rohres 1, wobei sich das Verhältnis des Durchmessers der beiden Rohre nach den pro Zeiteinheit zu transportierenden Fluidmengen richtet. Durch seine Biegeweichheit paßt sich der Inliner 3 an den Verlauf des äußeren Rohres 1 an. In den gekrümmten Abschnitten 2 weist der Inliner einen größeren Bogenradius auf als das äußere Rohr 1 und stutzt sich jeweils an der Bogeninnenseite am äußeren Rohr ab. Zwischen äußerem Rohr 1 und Inliner 3 bildet sich ein Spulraum 4, in dem beispielsweise Heizgas transportiert werden kann. Im Innenraum des Inliners 3 wird Sauergas befördert. Der Druck des Gases im Inliner 3 wird hoher gewählt als der Druck des Spülgases im Spülraum 4. Auf diese Weise wird eine Beulgefahr des Inliners 3, die bei erhöhtem Druck im Spulraum 4 besteht, ausgeschlossen.

Für den Sauergastransport ist vorgesehen, das Sauergas im Inliner bei einem Druck von 40 - 160 bar zu Transportieren. Im Spülraum wird ein weiteres Nutzmedium bei einem Druck von 10 - 40 bar transportiert, beispielsweise Heizgas oder Spindelöl. Da der Inliner 3 in ein bereits vorhandenes Druckrohr 1 eingezogen wird, sind die Sicherheitsreserven gegenüber der ursprunglichen einfachen Leitung 1 erhöht. Inliner 3 und äußeres Rohr 1 sind auf ungefähr dieselbe Druckfestigkeit ausgelegt. Birst daher der Inliner 3, wird der Druck vom äußeren Rohr 1 aufgefangen, so daß keine Gefährdung in der Umgebung der Leitung zu befürchten ist. Die Sicherheit der Leitung kann weiter erhöht werden, indem Sensoren (nicht dargestellt) zur Überwachung des Spülraums 4 vorgesehen werden. Dies können beispielsweise Drucksensoren sein, die mit einer Armatur gekoppelt sind. Bei einem raschen Druckanstieg im Spülraum 4 kann dann der Gasstrom im Inliner automatisch gestoppt werden. Auch ist eine analytische Überwachung durch entsprechende Sensoren möglich, so daß durch Überwachung der Sauergaskonzentration im Spülraum 4 auch kleinere Lecks im Inliner 3 detektiert werden können.

Prinzipiell lassen sich auch druckweiche Inliner verwenden. Die Drücke im Inliner und im Spülraum mussen dann aber stets gleich hoch sein um ständig einen stabilen Spülraum garantieren zu konnen.

Der Inliner 3 kann aus Kunststoff, Stahl oder armiertem Kunststoff bestehen.

Fur einen Stahlinliner muß Edelstahl eingesetzt werden, der gegen die mit dem Naßgastransport verbundenen Probleme resistent ist. Die Verbindungen zwischen einzelnen Abschnitten des Inliners 3 werden als Schweißnähte ausgeführt. Ferner kann auch das äußere Rohr 1 nach Einbau eines Inliners wieder durch Schweißen verschlossen werden. Stahlinliner konnen jedoch wegen ihrer hohen Biegesteifigkeit nur in geraden Abschnitten eingezogen werden. Sämtliche gekrümmte Abschnitte müssen getrennt als vorgefertigte Elemente erstellt werden und dann in die entsprechenden Leitungsabschnitte eingesetzt werden.

Auch glasfaserverstärkte Kunststoffinliner sind als Inliner 3 für den Transport von Sauergas geeignet. Sie sind resistent gegen aggressive Medien und druckfest. Die Verbindung zwischen einzelnen Abschnitten des Inliners 3 erfolgt durch Anlaminieren. Glasfaserverstärkte Kunststoffrohre besitzen eine hohe Steifigkeit. Sie lassen sich daher nicht in gekrümmte Abschnitte einer vorhandenen Druckleitung einziehen. Wie bei Stahlrohren müssen gekrümmte Abschnitte zunächst als vorgefertigte Elemente erstellt werden, die später in die entsprechenden Abschnitte der Leitung eingesetzt werden.

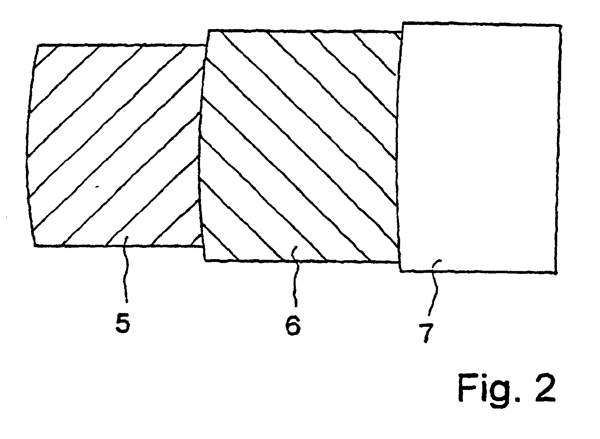

Kunststoffrohre sind bisher in Druckstufen von bis zu 25 bar bekannt. Als Werkstoffe werden Polypropylen (PP), Polyethylen-HD (PEHD) und Polyethylen-X (PE-X) eingesetzt. Der Druckfestigkeit der Rohre sind jedoch durch die auszuführende Wandstärke und den Werkstoff Grenzen gesetzt. Eine signifikante Steigerung der Tragfähigkeit kann allerdings erreicht werden, wenn die Kunststoffrohre bewehrt werden. Ein solches bewehrtes Kunststoffrohr ist in Fig. 2 dargestellt. Auf einem handelsübliches PEHD-Rohr 5 ist eine Bewehrung 6 aus Aramid-Gewebelagen angebracht. Zum Schutz des Rohres befindet sich auf der Außenseite des Rohres noch eine dünne Hülle 7 aus PEHD. Derartige Rohre zeigen eine Druckfestigkeiten von bis zu 160 bar bei 30 °C. Bei Temperaturen von bis zu 70 °C konnen noch Druckstufen in der Größenordnung von 100 bar aufgenommen werden.

Typische Dimensionierungen und Druckfestigkeiten sind in Tabelle 1 angegeben.

**Tab.1:**

| Dimensionierung von Aramid-bewehrten Kunststoffrohren, Temperaturbereich -30 °C - +30 °C | | |
|---|---|---|
| Außendurchmesser | Wandstärke | Druckfestigkeit |
| (mm) | (mm) | (bar) |
| 143 | 16,5 | 80 |
| 179 | 17,5 | 100 |
| 273 | 21,5 | 80 |

Die Druckfestigkeit der Rohre kann durch entsprechende Dimensionierung der Wandstärke und der Stärke bzw. Dichte der Aramidschicht gesteigert werden.

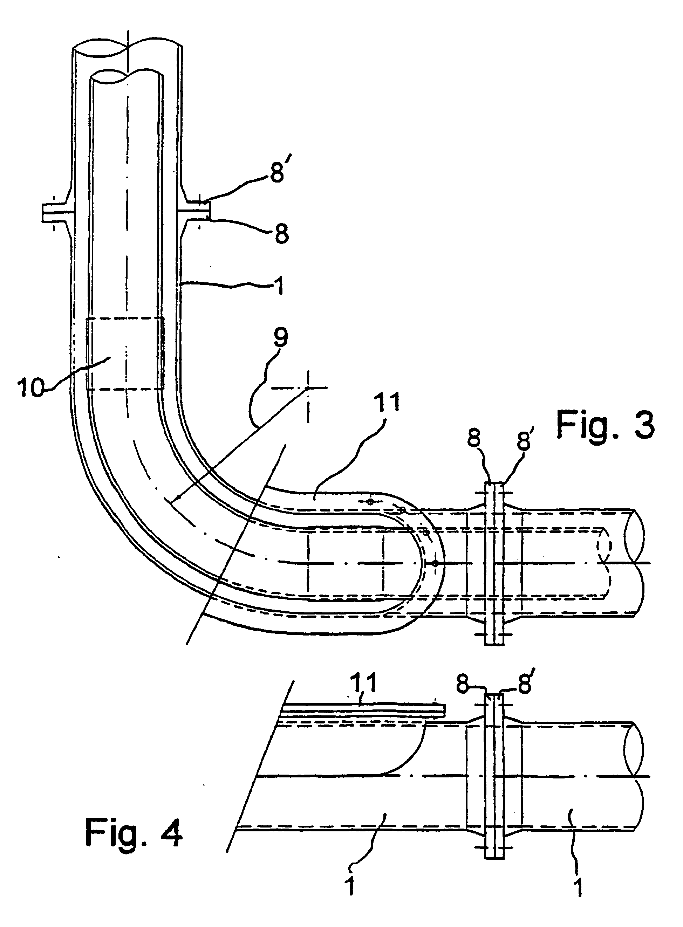

In Fig. 3 ist ein Horizontalbogen der Leitung dargestellt. An den Enden eines bogenförmig gekrummten äußeren Rohres 1 sind jeweils Flansche 8 vorgesehen, mit denen das Rohr 1 mittels Schraubverbindungen mit dem Flansch 8' eines geraden Leitungsstücks verbunden wird. Im Inneren des Rohres 1 befindet sich ein gekrümmter Inliner 3, dessen Krümmungsradius 9 dem des äußeren Rohres 1 entspricht. Der Inliner 3 wird also möglichst zentral im äußeren Rohr 1 angeordnet. Die einzelnen Abschnitte des Inliners 3 werden durch Hülsen 10 mit Rechts-Links-Gewinde eingesetzt, die in ein Gegengewinde in der PEHD-Hülle des Inliners 3 eingreifen. Diese Hülsen 10 können beispielsweise aus Edelstahl oder Aluminium sein. Zur Montage ist der Inliner durch eine Öffnung im äußeren Rohr 1 zugänglich. Diese Öffnung wird nach der Montage durch einen verschraubten Deckel 11 wieder verschlossen.

In Fig. 4 ist die Verbindung zwischen geradem und gekrümmtem Leitungsabschnitt in seitlicher Ansicht gezeigt. Die äußeren Rohre 1 sind über einen Flansch 8, 8' verbunden. Am gekrümmten Abschnitt ist ein Deckel 11 vorgesehen, mit dem die Montageöffnung (nicht sichtbar) im äußeren Rohr 1 verschlossen werden kann.

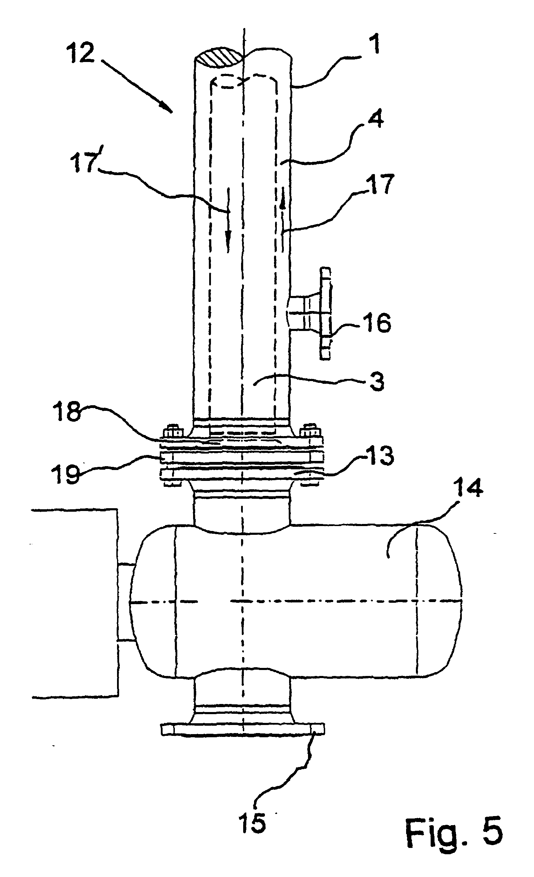

Fig. 5 zeigt einen Armaturenanschluß. Die Leitung 12 ist mittels Flansch 18 an der Armatur 14 angeflanscht. Dabei trägt der Inliner 3 einen Flansch 19, der zwischen dem Flansch 13 der Armatur 14 und dem Flansch 18 des Rohrs 1 eingespannt ist. Das im Inliner 3 transportierte Sauergas wird über den Anschluß 15 aus der Armatur 14 abgeführt. Am äußeren Rohr 1 ist ein Anschluß 16 zur Beschickung des Spülraums 4 vorgesehen. Der Gasfluß im Inliner und im Spülraum 4 erfolgt in entgegengesetzten Richtungen, wie dies durch Pfeile 17, 17' angedeutet ist. Auf diese Weise kann beispielsweise im Inliner 3 Sauergas von einer Bohrstelle einer zentralen Trocknungsanlage zugeführt werden, während mit entgegengesetzter Strömungsrichtung im Spülraum 4 Heizgas einer Warmequelle an der Bohrstelle zugeführt wird.

Zum Einziehen des Inliners in ein vorhandenes Druckrohr muß zunächst eine Inspektion der Leitung durchgeführt werden. Diese Inspektion ist unverzichtbare Voraussetzung, damit die Leitung bewertet werden kann und der Erfolg der folgenden Arbeiten gesichert ist. Fur die Inspektion kommen zwei Verfahren in Frage, die im Allgemeinen beide nacheinander eingesetzt werden. Zunachst ist mit einem Scheibenmolch festzustellen, ob Ovalitäten oder Hindernisse vorliegen. Der Scheibenmolch sollte eine Durchmessertoleranz > 5 mm für Rohre mit einem Durchmesser von 6 5/8" nicht zulassen. Anschließend wird mit einer Kamerabefahrung festgestellt, ob es kleinere, aber scharfkantige Hindernisse, wie Wurzeldurchhange von Schweißnahten oder Walzfehler gibt. Inspektionskameras dieser Art sind aus der Überwachung von Abwasserleitungen bekannt. Die Leitung wird zu diesem Zweck von außen geöffnet. Inspektionslängen, die in einem Zuge von der Kamera befahren werden konnen, liegen in der Großenordnung von mehreren 100 m. Erkannte Problemstellen werden aus der Leitung herausgeschnitten und ausgewechselt. Ggf. muß nach dem Auswechseln eine erneute Inspektion der Leitung durchgeführt werden.

Anschließend werden alle Horizontalbögen (90 °) aus den Leitungen entfernt. Etagen und Düker mit einem kritischen Krümmungswinkel werden herausgeschnitten und durch Systemteile mit geringer Krümmung (elastische Bögen) ersetzt.

Auf geraden Rohrstrecken wird das vorhandene Druckrohr 1 an den Festpunkten (z. B. Armatur) gelöst, über eine Strecke von ca. 30 m freigelegt und seitlich verzogen, so daß ein vorgefertigter Inlinerstrang eingezogen werden kann. Der Einziehvorgang wird mit üblichen Winden und Stahlseilen durchgeführt. Das Stahlseil wird mit einem vorlaufenden Hilfsseil eingefädelt. Das Hilfsseil kann zum Beispiel im Zuge der Kamerainspektion eingezogen werden. Anschließend wird ein Zugkopf am vorderen Ende des Inlinerstrangs aufgeschraubt. Dazu werden dieselben Gewinde verwendet, auf die später zur Verbindung der einzelnen Inlinerabschnitte Hülsen aufgeschraubt werden. Alternativ kann das Zugseil auch durch den Inlinerstrang gefadelt und an dessen rückwartigem Ende verankert werden. Der Inliner wird dann als Schubeinheit eingefädelt.

Der Einziehvorgang kann durch den Einsatz von Schmiermitteln wesentlich vereinfacht werden. In gekrummten Abschnitten des ursprünglichen Druckrohres, die in der Leitung verblieben sind, ist eine Schmierung unabdingbar. Als Schmiermittel konnen alle handelsüblichen Schmiermittel bis hin zur Schmierseife zum Einsatz kommen. Als besonders geeignetes Schmiermittel hat sich Bentonit erwiesen. Bentonit ist preiswert verfügbar und kann nach Durchführung der Arbeiten mit Wasser problemlos herausgespült werden. Wird der gesamte Spülraum mit Bentonit gefüllt, kann wegen des entsprechenden Auftriebes verhindert werden, daß sich in Zwickeln Reste festsetzen. Nach dem Einziehen des Inliners in die geraden bzw. schwach gekrümmten Leitungsabschnitte werden die stark gekrümmten Abschnitte als entsprechend vorgefertigte Elemente eingesetzt. Die Verbindung der Inlinerstücke erfolgt über Hülsen mit Rechts-Links-Gewinde. Am Leitungsende erfolgt der Anschluß an die Armaturen über entsprechende Inlinerpaßstucke.

### Bezugszeichenliste

- 1: äußeres Rohr
- 2: gekrummter Abschnitt
- 3: Inliner
- 4: Spülraum
- 5: PEHD-Rohr
- 6: Bewehrung
- 7: Hülle
- 8: Flansch
- 9: Radius
- 10: Hulse
- 11: Deckel
- 12: Leitung
- 13: Flansch
- 14: Armatur
- 15: Anschluß
- 16: Anschluß
- 17: Gasfluß
- 18: Rohrflansch
- 19: Inlinerflansch

## Patentansprüche

1. Verfahren zum Transport von Sauergas, **dadurch gekennzeichnet, dass** das Sauergas in ungetrocknetem Zustand von einem Förderplatz zu einer zentralen Trocknungsanlage transportiert wird, dass der Transport durch eine doppelwandige Leitung erfolgt, die aus einem äußeren Rohr (1) und einem gegen aggressive Medien resistenten Inliner (3) aufgebaut ist, wobei das Sauergas durch den Inliner (3) geleitet wird und ein zwischen dem äußeren Rohr (1) und dem Inliner (3) gebildeter Spülraum (4) von einem Spülmedium, insbesondere Gas, durchspült wird.

2. Verfahren nach Anspruch 1, **dadurch gekennzeichnet, daß** der Spülraum (4) zum Transport von Nutzmedien, beispielsweise Heizgas oder Spindelöl, als Spülmedium verwendet wird.

3. Verfahren nach Anspruch 1 oder 2, **dadurch gekennzeichnet, daß** der Druck im Inliner (3) auf 40 - 160 bar und im Spülraum (4) auf 10-40 bar eingestellt wird.

4. Verfahren nach Anspruch 1, 2 oder 3, **dadurch gekennzeichnet, daß** der Spülraum (4) mit einem Drucksensor überwacht wird.

## Claims

1. A method for transporting acid gas, **characterised in that** the acid gas is transported in the undried condition, from a conveying location to a central drying installation, that the transport is effected by a double-walled conduit which is constructed of an outer tube (1) and a liner (3) resistant to aggressive media, wherein the acid gas is led through the liner (3) and a flushing space (4) formed between the outer tube (1) and the liner (3) is flushed through with a flushing medium, in particular a gas.

2. A method according to claim 1, **characterised in that** the flushing space (4) is used for the transport of working media, for example heating gas or spindle oil as a flushing medium.

3. A method according to claim 1 or 2, **characterised in that** the pressure in the liner (3) is set to 40 - 160 bar and in the flushing space (4) to 10 - 40 bar.

4. A method according to claim 1, 2 or 3, **characterised in that** the flushing space (4) is monitored with a pressure sensor.

## Revendications

1. Procédé pour transporter du gaz acide, **caractérisé en ce qu'** on transporte le gaz acide à l'état non séché, d'un emplacement de mettre au jour à une installation centrale de séchage, le transport se fait à l'aide d'une conduite à double paroi comprenant un tuyau extérieur (1) et un revêtement intérieur (3), résistant aux milieux agressifs, en conduisant le gaz acide dans le revêtement intérieur (3) et en rinçant un espace de rinçage (4) délimité entre le tuyau extérieur (1) et le revêtement intérieur (3) par un fluide de rinçage, en particulier du gaz.

2. Procédé selon la revendication 1, **caractérisé en ce que** l'espace de rinçage (4) est utilisé pour transporter un fluide utile comme, par exemple, du gaz de chauffage ou de l'huile de broche comme fluide de rinçage.

3. Procédé selon la revendication 1 ou 2, **caractérisé en ce qu'** on règle la pression dans le revetêment intérieur (3) à 40-160 bars et dans l'espace de rinçage (4) à 10-40 bars.

4. Procédé selon les revendications 1, 2 ou 3, **caractérisé en ce que** l'espace de rinçage (4) est surveillé par un capteur de pression.
